# EUROPEAN PATENT APPLICATION

(11) **EP 4 443 637 A1**
(43) Date of publication of application: **09.10.2024**
(21) Application number: 22901201.8
(22) Date of filing: 25.11.2022
(51) Int. Cl.: H01M 50/578, H01G 2/18, H01G 11/14, H01G 11/78, H01G 11/80, H01M 50/152, H01M 50/179, H01M 50/184, H01M 50/531, H01M 50/533, H01M 50/545

(54) **POWER STORAGE DEVICE**

(30) Priority: 30.11.2021 JP 2021194353; 30.11.2021 JP 2021194412
(71) Applicant: Panasonic Intellectual Property Management Co., Ltd., Osaka-shi, Osaka 571-0057 (JP)
(72) Inventor: NAGAO, Takeshi, Osaka 571-0057 (JP); SHIMIZU Kazumichi, Osaka 571-0057 (JP)
(74) Representative: Eisenführ Speiser
(86) International application number: PCT/JP2022/043547
(87) International publication number: WO 2023/100768

(57) **Abstract**

A power storage device 10 includes a case 20, a power storage element 30, a band-shaped lead 41, and a sealing member 50. The sealing member 50 includes an insulating gasket 51 including a base part 53, and a conductive sealing plate 56. The sealing plate 56 includes a displacement part 57. The displacement part 57 of the sealing plate 56 and the lead 41 are electrically connected to each other. The displacement part 57 is configured to be displaced in a direction away from the lead 41 in response to an increase in an internal pressure of the case 20, thereby electrically disconnecting the displacement part 57 and the lead 41 from each other. The power storage device 10 further includes displacement suppressing means 43 disposed in the case 20 and configured to suppress displacement of the lead 47 when the displacement part 57 is displaced in the direction away from the lead 41. Thus, it is possible to increase the operational reliability of a current interrupt device.

## Description

### [Technical Field]

The present disclosure relates to a power storage device.

### [Background Art]

A power storage device including a so-called current interrupt device (CID) has been conventionally known (e.g., Patent Literature 1). The power storage device described in Patent Literature 1 includes a case having a bottomed tubular shape, a power storage element disposed in the case, a lead connected to an electrode of the power storage element, and a sealing member sealing an opening of the case. The sealing member includes an insulating gasket including a base part, and a conductive sealing plate including a projection, and the base part is disposed between the sealing plate and the power storage element. The projection of the sealing plate is inserted into a through hole formed in the base part, and is connected to the lead. As a function of the current interrupt device, the projection is configured to be displaced in a direction away from the lead in response to an increase in the internal pressure of the case, thereby disconnecting the projection and the lead from each other.

### [Citation List]

### Patent Literature

Patent Literature 1: Japanese Laid-Open Patent Publication No. 2021-125304

### [Summary of Invention]

### [Technical Problem]

To increase the operational reliability of the current interrupt device described in Patent Literature 1, the lead is required to be less likely to be displaced when the projection is displaced. However, the operational reliability of the current interrupt device may be impaired when the lead and the base part of the gasket undergo a certain degree of deformation, because the lead is also displaced together with the projection. Under such a circumstance, an object of the present disclosure is to increase the operational reliability of the current interrupt device.

### [Solution to Problem]

An aspect of the present disclosure relates to a power storage device. The power storage device includes: a case including a cylindrical tube part having an opening end portion at one end thereof, and a bottom part closing another end of the tube part; a power storage element disposed in the case and including a pair of electrodes; a band-shaped lead connected to one electrode of the pair of electrodes; and a sealing member sealing the opening end portion of the case, wherein the sealing member includes an insulating gasket and a conductive sealing plate, the gasket includes a compression part interposed between the tube part and the sealing plate, and a base part disposed between the sealing plate and the power storage element, the sealing plate includes a displacement part, and an outer circumferential part provided around the displacement part and held by the compression part, the displacement part of the sealing plate and the lead are electrically connected to each other, the displacement part is configured to be displaced in a direction away from the lead in response to an increase in an internal pressure of the case, thereby electrically disconnecting the displacement part and the lead from each other, and the power storage device further includes displacement suppressing means disposed in the case and configured to suppress displacement of the lead when the displacement part is displaced in the direction away from the lead.

### [Advantageous Effects of Invention]

According to the present disclosure, it is possible to increase the operational reliability of a current interrupt device.

While the novel features of the present disclosure are set forth in the appended claims, the present disclosure, both as to organization and content, will be better understood and appreciated, along with other objects and features thereof, from the following detailed description taken in conjunction with the drawings.

### [Brief Description of Drawings]

[FIG. 1] A cross-sectional view schematically showing a configuration of a power storage device according to Embodiment 1.
[FIG. 2] A perspective view showing relevant parts of a first lead according to Embodiment 1.
[FIG. 3] A cross-sectional view schematically showing a configuration of a power storage device according to a modification of Embodiment 1.
[FIG. 4] A perspective view showing relevant parts of a first lead according to Embodiment 2.
[FIG. 5] A cross-sectional view schematically showing a configuration of a power storage device according to Embodiment 3.
[FIG. 6] An enlarged cross-sectional view showing relevant parts of the power storage device according to Embodiment 3.
[FIG. 7] A bottom view of a sealing member according to Embodiment 3, as viewed from the bottom of a case.
[FIG. 8] A bottom view of a sealing member according to Embodiment 4, as viewed from the bottom of a case.
[FIG. 9] A bottom view of a sealing member according to Embodiment 5, as viewed from the bottom of a case.

### [Description of Embodiments]

Embodiments of a power storage device according to the present disclosure will be described below by way of examples. However, the present disclosure is not limited to the examples described below. Although examples of specific numerical values and materials may be given in the following description, other numerical values and materials may be used as long as the effects of the present disclosure can be achieved.

The power storage device according to the present disclosure may be a secondary battery or a capacitor. The power storage device may be a non-aqueous electrolyte secondary battery (a lithium ion secondary battery, a lithium secondary battery, etc.) or a nickel-metal hydride secondary battery. The power storage device may be an electric double layer capacitor, or a lithium ion capacitor or the like. The power storage device includes a case, a power storage element, a band-shaped lead, a sealing member, and displacement suppressing means.

The case includes a cylindrical tube part having an opening end portion at one end thereof, and a bottom part closing the other end of the tube part. The case may function as one electrode terminal, for example. When the case functions as an electrode terminal, for example, the case may be formed of a conductive metal, and one electrode (an electrode not electrically connected to a sealing plate, described below) of the power storage element and the case may be electrically connected to each other. For example, a negative electrode and the case may be electrically connected to each other.

For example, a metal case may be used as the case. The metal case may be formed of aluminum, iron, nickel, copper, or an alloy or a cladding material or the like of any of these metals. The case of the power storage device is not limited to the aforementioned constitutions, and a known case may be used.

The power storage element is disposed in the case and includes a pair of electrodes composed of a positive electrode and a negative electrode that are opposed to each other with a separator interposed therebetween. As for the shape of the power storage element, it is possible to use, for example, a wound power storage element obtained by winding a positive electrode and a negative electrode stacked with a separator interposed therebetween. The power storage element is not particularly limited, and may be selected according to the type of the power storage device. A known power storage element may be used as the power storage element. For example, when the power storage device is a secondary battery, a power storage element including a positive electrode, a negative electrode, a separator, and an electrolytic solution may be used. The negative electrode of a lithium ion secondary battery as an example contains, as a negative electrode active material, a substance that reversibly adsorbs and desorbs lithium ions. Examples of the negative electrode active material include carbon materials such as graphite, and inorganic compounds such as silicon oxide and titanium oxide. The positive electrode of the lithium ion secondary battery may contain, as a positive electrode active material, a lithium-containing transition metal composite oxide or the like. Examples of the transition metal composite oxide include elements such as nickel, manganese, cobalt, and aluminum.

When the power storage device is a capacitor, a power storage element including at least a pair of electrodes, an electrolytic solution, and a separator may be used. These constituent elements can be selected according to the type of the capacitor.

The lead is connected to at least one electrode of the pair of electrodes of the power storage element. The lead electrically connects the one electrode connected at one end thereof to the sealing member or the case at the other end thereof. A lead used for a known power storage device may be used as the lead. A band-shaped metal sheet may be used as the lead. Examples of the metal (a conductive metal) forming the lead include aluminum, iron, nickel, copper, or alloys or cladding materials or the like of these metals. The one end of the lead may be connected to either one of the pair of electrodes of the power storage element. However, when the power storage device is a secondary battery, the lead connected to the sealing member is connected to the positive electrode, for example.

The sealing member seals the opening end portion of the case. The sealing member includes an insulating gasket and a conductive sealing plate.

The gasket includes a compression part interposed between the tube part of the case and the sealing plate, and a base part disposed between the sealing plate and the power storage element. The base part may be overlaid with the sealing plate. The shape of the base part may be, but is not limited to, a circular plate shape, for example.

The gasket is formed of an elastic and insulating material for functioning as a gasket. The gasket may be formed of a known material used for a gasket of a secondary battery or a capacitor. Examples of the material of the gasket include polypropylene (PP), polyphenylene sulfide (PPS), polybutylene terephthalate (PBT), perfluoroalkoxy alkane (PFA), and polyether ether ketone (PEEK). As necessary, an additive (e.g., a known additive) may be added to these materials. The method for forming the gasket is not limited, and the gasket may be formed, for example, using a method such as injection molding.

The sealing plate includes a displacement part, and an outer circumferential part provided around the displacement part and held by the compression part of the gasket. The displacement part may be provided at the center of the sealing plate. A projection protruding toward the power storage element may be formed on the displacement part. The sealing plate may further include a thinned part linking the displacement part and the outer circumferential part and having a smaller thickness than the displacement part and the outer circumferential part. The sealing plate is formed in the shape of, for example, a circular plate as a whole. The displacement part may be circular or polygonal, as viewed from an axial direction of the case. The outer circumferential part provided around the displacement part is, for example, annular as viewed from the axial direction of the case, and the thinned part may also be annular. The projection may be disposed, for example, at the center of the displacement part. Note that the shape of the projection as viewed from the axial direction may be circular, oblong, elliptical, rectangular, or polygonal. The sealing plate may function as an electrode terminal, or may function as a displacement member that electrically connects an electrode terminal (e.g., a terminal cap) and the lead to each other. The sealing plate is formed of, for example, a metal plate, which may be formed of, for example, metal such as aluminum, nickel, copper, or iron, or an alloy or a cladding material of any of these metals. Note that the projection and the thinned part of the displacement part are not necessarily required.

The displacement part of the sealing plate and the lead are electrically connected to each other. For example, the displacement part and the lead may be connected to each other indirectly via another member, or may be directly connected to each other. The method for indirectly or directly connecting the sealing plate and the lead is not particularly limited, and welding or the like may be used, for example.

With the power storage device according to the present disclosure, as a function of a current interrupt device, the displacement part is configured to be displaced in a direction away from the lead in response to an increase in the internal pressure of the case, thereby electrically disconnecting the displacement part and the lead from each other. This displacement may occur when the internal pressure of the case exceeds a predetermined value. When such displacement occurs, displacement of the lead is suppressed by the displacement suppressing means disposed in the case. The displacement part is electrically decoupled from the lead whose displacement is suppressed, whereby the current interrupt device operates appropriately.

The base part may have a through hole formed therein. The through hole may be disposed in a central region of the base part. The shape of the through hole is not particularly limited, and may be, for example, circular, elliptical, oblong, rectangular, polygonal, or the like. The lead may include a connection region in which at least one bent part is formed as the displacement suppressing means at at least one end of the lead in a width direction (a transverse direction) of the lead. Such a connection region has higher rigidity to bending force than a conventional lead connection region (a portion connected to the displacement part) in which no bent part is formed. The bent parts may be formed at both ends of the lead in the width direction, or may be formed only at one end of the lead in the width direction. The displacement part of the sealing plate and the connection region of the lead may be connected to each other via the through hole of the base part. That is, the lead may be connected to the sealing plate electrically and physically. The method for connecting the lead and the sealing plate is not particularly limited, and welding or the like may be used, for example. Note, however, that, in order for the current interrupt device to function, it is necessary to use a connection method that causes the lead and the sealing plate to be disconnected from each other when the force acting to separate the lead and the sealing plate from each other increases. In this case, as a mechanism for causing a connection portion between the lead and the displacement part to break, it is possible to use a mechanism for causing a welded portion between the lead and the displacement part to break; alternatively, the lead may be provided with a fragile part around a portion thereof connected to the displacement part, and the fragile part may be caused to break when the displacement part is displaced. When the lead and the sealing plate are connected to each other by welding, the force required to separate the lead and the sealing plate from each other can be adjusted by changing the welding conditions such as the welding area and the welding depth. The welding method is not particularly limited, and it is possible to use laser welding, resistance welding, friction stirring, ultrasonic joining, and the like.

With the power storage device having this configuration, as a function of the current interrupt device, the displacement part is configured to be displaced in a direction away from the lead in response to an increase in the internal pressure of the case, thereby disconnecting the displacement part and the lead from each other. This displacement may occur when the internal pressure of the case exceeds a predetermined value. When such displacement occurs, at least one bent part is formed in a portion of the lead to which the displacement part is connected, namely, the connection region. Therefore, the connection region has higher strength and is less likely to be deformed than a region of the lead in which no bent part is formed. Accordingly, even when the lead is pulled by the displacement part that is displaced, the lead is suppressed from being displaced. The displacement part is decoupled from the lead whose displacement is suppressed, whereby the current interrupt device operates appropriately.

The at least one bent part may have a fold extending along a longitudinal direction of the lead. Such a fold may be formed, for example, by making a cut in the lead, and bending the lead along the longitudinal direction. With this configuration, sufficient strength can be easily secured in the entire connection region in the longitudinal direction of the lead.

The at least one bent part may have a fold inclined relative to the longitudinal direction of the lead. Such a fold may be formed, for example, by bending the lead along a straight line extending from the center side toward the end side of the lead in the width direction as the distance from a distal end of the lead increases. With this configuration, the at least one bent part can be formed by simply performing a step of bending the lead, so that it is possible to suppress an increase in the number of man-hours required to produce the power storage device.

An angle formed between the at least one bent part and a principal surface of the lead may be greater than 0° and less than 180°. When the angle is within such a range, the bent part can provide an effect of increasing the strength of the lead. The angle is preferably greater than 45° and less than 135°, and more preferably greater than 85° and less than 95°. The angle may be 90°, for example.

The at least one bent part may include two bent parts. One of the bent parts may be disposed at one end of the lead in the width direction. The other bent part may be disposed at the other end of the lead in the width direction. With this configuration, no bent part is formed in a central region of the lead in the width direction, so that the central region can be used for connection to the displacement part. In addition, forming two bent parts can sufficiently increase the strength of the connection region.

In a direction perpendicular to the axial direction of the case, one end portion and another end portion of the connection region may each overlap the outer circumferential part of the sealing plate as viewed from the axial direction of the case. The base part of the gasket may be sandwiched between the one end portion of the connection region and the outer circumferential part, and between the other end portion of the connection region and the outer circumferential part. With this configuration, the base part is less likely to be deformed by the connection region of the lead that is pulled along with the displacement of the displacement part during operation of the current interrupt device. This is because the one end portion and the other end portion of the connection region are inhibited from being displaced by the outer circumferential part of the sealing plate that is located opposite these end portions across the base part. Accordingly, it is possible to further increase the operational reliability of the current interrupt device.

The power storage device may further include, as the displacement suppressing means, a reinforcing member that reinforces the base part. To reinforce the base part of the gasket with high reliability, the reinforcing member may be formed of a material having higher rigidity than the material forming the gasket. While the reinforcing member may be formed of a material having higher rigidity than the lead, the reinforcing member may be formed of the same material as the lead and be designed to be thicker than the lead. The reinforcing member may be a conductive member, and may be formed of metal (e.g., aluminum, iron, nickel, copper, stainless steel, etc.), for example. The reinforcing member may be formed of an insulating resin having higher rigidity than the gasket. Examples of the insulating resin include polyphenylene sulfide (PPS), polybutylene terephthalate (PBT), perfluoroalkoxy alkane (PFA), and polyether ether ketone (PEEK). The reinforcing member may be integrated into a single piece with the gasket or the base part of the gasket, or may be separate therefrom. In the former case, the reinforcing member may be insert-molded together with the gasket, for example. In the latter case, the base part may mechanically lock to the reinforcing member, the reinforcing member may be press-fitted into a hole provided in the base part, or the reinforcing member and the base part may be fixed to each other via an adhesive. When the reinforcing member is formed of an insulating material, a through hole or a cutout may be formed in the reinforcing member, and the projection of the displacement part may be connected to the lead while the projection is passed through the through hole or the cutout. The base part may cover a first portion of a principal surface of the reinforcing member on the power storage element side, and have at least one opening exposing a second portion of the principal surface. The second portion may be used for electrical connection between the displacement part of the sealing plate and the lead. Desirably, the first portion covers as large an area (e.g., an area of 70% or more, or 90% or more) of the region, other than the second portion, of the principal surface of the reinforcing member on the power storage element side. Of a principal surface of the base part on the power storage element side, a portion overlapping the reinforcing member may protrude toward the power storage element side relative to a portion not overlapping the reinforcing members. With this configuration, the portion of the base part that needs to be thickened can be easily minimized. Also, thickening of the compression part can be suppressed. Accordingly, it is possible to suppress an increase in the size of the sealing member.

With the power storage device having this configuration, as a function of the current interrupt device, the displacement part is configured to be displaced in a direction away from the lead in response to an increase in the internal pressure of the case, thereby electrically disconnecting the displacement part and the lead from each other. This displacement may occur when the internal pressure of the case exceeds a predetermined value. When such displacement occurs, the base part of the gasket is reinforced by the reinforcing member and therefore is less likely to be deformed. Accordingly, even when the lead is pulled along with the aforementioned displacement, the lead abuts against the base part of the gasket and thus is suppressed from being displaced. The displacement part is electrically decoupled from the lead whose displacement is suppressed, whereby the current interrupt device operates appropriately.

Furthermore, with the power storage device having this configuration, the first portion of the reinforcing member is covered by the base part of the gasket. Accordingly, the reinforcing member is less likely to move relative to the base part. Since the base part is fixed to the case, the reinforcing member is also less likely to move relative to the case. Accordingly, when the reinforcing member is conductive, it is possible to inhibit the reinforcing member from being short-circuited by moving in the case to come into contact with the case or the like during operation of the current interrupt device. In addition, even when the reinforcing member is formed of an insulating material, the operation of the current interrupt device is likely to be stabilized.

When the reinforcing member is a conductive member, the displacement part of the sealing plate and the reinforcing member may be connected to each other by the first connection part. The first connection part may be provided at a portion corresponding to the center of the displacement part and the reinforcing member. The reinforcing member and the lead may be connected to each other by a second connection part separate from the first connection part. Also, the displacement part may be configured to be displaced in a direction away from the lead in response to an increase in the internal pressure of the case, thereby disconnecting the displacement part and the reinforcing member from each other so as to electrically disconnect the displacement part and the lead from each other. With this configuration, the displacement part of the sealing plate and the lead are connected to each other indirectly via the conductive reinforcing member. Also, the function of the current interrupt device is exerted as a result of the displacement part and the reinforcing member being disconnected from each other, or in other words, as a result of the first connection part breaking.

The first connection part and the second connection part may be spaced apart from each other in a radial direction of the case. With this configuration, the first connection part and the second connection part can be easily formed separately under different conditions. Accordingly, the first connection part can be formed to have a connection strength lower than the connection strength of the second connection part, thus easily realizing the operation of the current interrupt device by causing the first connection part to break. Note that the first connection part and the second connection part need not be spaced apart from each other in the radial direction of the case. In this case, the two connection parts may be integrated into a single piece, or may be separate from each other.

The at least one opening may expose, as the second portion, the above-described principal surface at positions respectively corresponding to the first connection part and the second connection part. This configuration allows the first connection part and the second connection part to be easily formed, for example, by welding via the second portion exposed through the at least one opening. In this case, the at least one opening may include a first opening exposing the first connection part, and a second opening exposing the second connection part, and the first opening and the second opening may be spaced apart from each other. This configuration allows the base part to cover more of a portion of the reinforcing member that does not contribute to the first connection part or the second connection part than a configuration in which the first and second connection parts are exposed through one opening. Accordingly, it is possible to reduce the possibility that the reinforcing member may come into contact with another conductive member and be short-circuited. In addition, connecting the lead and the reinforcing member to each other through the second opening allows a peripheral edge of the second opening to serve to suppress displacement of the lead, thus facilitating connection between the lead and the reinforcing member.

The base part may cover at least a portion of a principal surface of the reinforcing member on the sealing plate side. That is, at least a portion of the base part may be interposed between the sealing plate and the reinforcing member. This configuration allows the base part to hold the reinforcing member from both sides in the axial direction. Accordingly, the reinforcing member can be more firmly fixed to the base part. Furthermore, when the reinforcing member is formed of a conductive material, due to a portion of the base part being interposed between the reinforcing member and the sealing plate, the sealing plate and the reinforcing member can be suppressed from being electrically connected to each other after the sealing plate has operated as the current interrupt device. Note that the principal surface of the reinforcing member on the sealing plate side may be covered by an insulating member separate from the base part.

As described thus far, according to the present disclosure, it is possible to increase the operational reliability of the current interrupt device by suppressing displacement of the lead.

In the following, examples of the power storage device according to the present disclosure will be described with reference to the drawings. The above-described constituent elements can be applied to constituent elements of the examples of the power storage device described below. The constituent elements of the examples of the power storage device described below can be changed based on the above description. The matters described below may be applied to the above-described embodiment. Of the constituent elements of the examples of the power storage device described below, constituent elements that are not essential to the power storage device according to the present disclosure may be omitted. Note that the drawings described below are schematic views, and do not accurately reflect the actual shapes and the actual numbers of members.

### <<Embodiment 1>>

Embodiment 1 of the present disclosure will now be described. A power storage device 10 according to the present embodiment is a lithium ion secondary battery; however, the present disclosure is not limited thereto. For example, the power storage device 10 may be a lithium ion capacitor, an electric double layer capacitor, a power storage device in a category intermediate between the lithium ion secondary battery and the lithium ion capacitor, or any other electrochemical devices.

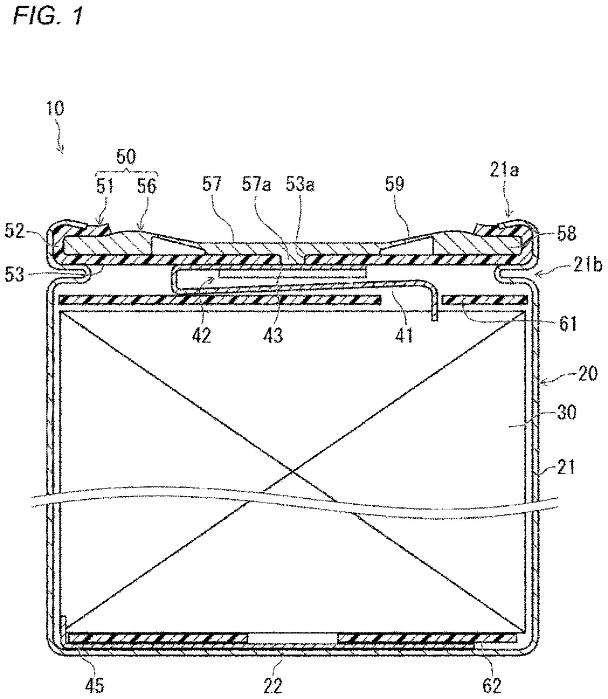

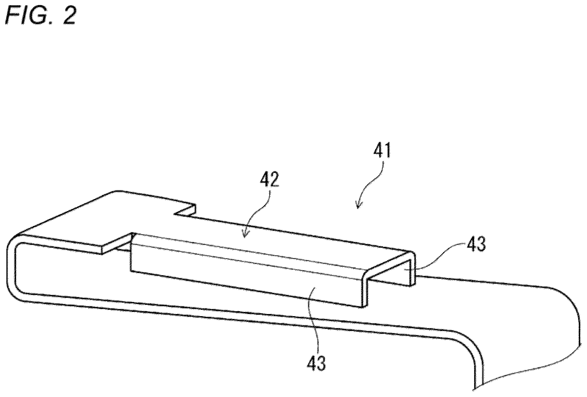

As shown in FIGS. 1 and 2, the power storage device 10 includes a case 20 having a bottomed tubular shape, a power storage element 30 disposed in the case 20 and including a pair of electrodes (not shown), a first lead 41 connected to one electrode of the pair of electrodes, a second lead 45 connected to the other electrode, and a sealing member 50 sealing an opening end portion 21a of the case 20. The power storage device 10 further includes first and second insulating plates 61 and 62. Each of the first and second insulating plates 61 and 62 is a circular plate-shaped member having a through hole formed therein.

The case 20 includes a tube part 21 having an opening end portion 21a at one end (the upper end in FIG. 1) thereof, and a bottom part 22 closing the other end of the tube part 21. An annular groove part 21b protruding radially inward of the tube part 21 is formed in the vicinity of the opening end portion 21a of the tube part 21. The sealing member 50 is disposed on an inner circumferential surface of the groove part 21b. The opening end portion 21a of the case 20 is crimped onto an outer circumferential part 58 of a sealing plate 56 (described below) via a gasket 51 (described below). Thus, the sealing member 50 is sandwiched between the groove part 21b and the opening end portion 21a, whereby the case 20 is sealed.

The power storage element 30 has a substantially columnar shape. The power storage element 30 is formed by winding a positive electrode and a negative electrode (both not shown) with a separator (not shown) interposed therebetween.

One end of the first lead 41 is connected to one electrode (the positive electrode in this example) of the power storage element 30. The first lead 41 is formed of a band-shaped metal sheet; however, the present disclosure is not limited thereto. The other end of the first lead 41 is provided with a connection region 42 in which two bent parts 43 are formed. The connection region 42 is connected to a projection 57a of the sealing plate 56. Accordingly, the sealing plate 56 functions as a positive electrode terminal of the power storage device 10. The first lead 41 is an example of the lead. The bent part 43 is an example of the displacement suppressing means.

As shown in FIG. 2, in the connection region 42, one bent part 43 is formed at either end of the first lead 41 in a width direction (a direction orthogonal to the plane of paper in FIG. 1) of the first lead 41. Each of the bent parts 43 has a fold extending along a longitudinal direction (the left-right direction in FIG. 1) of the first lead 41. One of the bent parts 43 is disposed at one end of the first lead 41 in the width direction. The other bent part 43 is disposed at the other end of the first lead 41 in the width direction. Each of the bent parts 43 is formed by making a cut in the first lead 41 and bending the first lead 41 along the longitudinal direction.

In the width direction of the first lead 41, the ratio: L2/L1, the ratio of a dimension L2 of a portion (a portion that is not used as the bent parts 43) of the connection region 42 that is used for connection to the projection 57a, to a dimension L1 of the first lead 41 may be, for example, 0.2 or more and 0.8 or less, or 0.3 or more and 0.7 or less. In other words, in the width direction of the first lead 41, the ratio: L3/L1, the ratio of a dimension L3 of a portion of the connection region 42 that is used as the bent parts 43, to the dimension L1 of the first lead 41 may be, for example, 0.2 or more and 0.8 or less, or 0.3 or more and 0.7 or less. Here, L1 = L2 + L3 holds.

The shapes and the dimensions of the two bent parts 43 may be the same, or different from each other. For example, although the two bent parts 43 of the present embodiment have shapes that are symmetrical about a plane perpendicular to a principal surface of the first lead 41 and passing through the center of the first lead 41, it is possible to provide two bent parts 43 having shapes that are asymmetrical about the aforementioned plane.

The connection region 42 extends over a predetermined length from a distal end of the first lead 41. Note, however, that the connection region 42 may extend over a predetermined length from a position at some distance away from the distal end of the first lead 41. In the latter case, no bent parts 43 are formed at a distal end portion of the first lead 41. Both cases require the presence of the connection region 42 at a portion of the first lead 41 to which the projection 57a of the sealing plate 56 is connected.

One end of the second lead 45 is connected to the other electrode (the negative electrode in this example) of the power storage element 30. The second lead 45 is formed of a band-shaped metal sheet; however, the present disclosure is not limited thereto. The other end of the second lead 45 is connected to the bottom part 22 of the case 20. Accordingly, the case 20 functions as a negative electrode terminal of the power storage device 10.

The sealing member 50 includes an insulating gasket 51 and a conductive sealing plate 56. The gasket 51 includes a compression part 52 interposed between the tube part 21 (the groove part 21b) and the sealing plate 56, and a base part 53 overlaid with the sealing plate 56. The base part 53 is disposed between the sealing plate 56 and the power storage element 30. The base part 53 has a planar shape having substantially the same size as the planar shape (circular shape) of the sealing plate 56. An oblong through hole 53a is formed in a central region of the base part 53. A peripheral edge portion of the base part 53 and the outer circumferential part 58 of the sealing plate 56 are in close contact with each other. Note that the gasket 51 may have, in the base part 53, a through hole (not shown) for sending a gas to the sealing plate 56, in addition to the through hole 53a into which the projection 57a is inserted.

The sealing plate 56 includes a displacement part 57 provided at the center thereof, an outer circumferential part 58 provided around the displacement part 57 and held by the compression part 52 of the gasket 51, and a thinned part 59 linking the displacement part 57 and the outer circumferential part 58. A projection 57a protruding toward the power storage element 30 is formed on the displacement part 57. The projection 57a has an oblong cross-sectional shape (a cross-sectional shape in a cross section perpendicular to the axial direction of the case 20); however, the present disclosure is not limited thereto. The thinned part 59 has a thickness that is smaller than the thickness of the displacement part 57 and the thickness of the outer circumferential part 58.

The projection 57a of the sealing plate 56 is inserted into the through hole 53a. Here, a gap may or may not be formed between the projection 57a and the through hole 53a. As described above, the projection 57a is connected to the connection region 42 of the first lead 41. That is, the displacement part 57 of the sealing plate 56 and the connection region 42 of the first lead 41 are connected to each other via the through hole 53a.

When the internal pressure of the case 20 increases, the projection 57a of the displacement part 57 is displaced in a direction away from the power storage element 30 (i.e., a direction away from the first lead 41). On the other hand, the displacement of the first lead 41 is suppressed by the connection region 42, which has high strength. Accordingly, when the displacement of the projection 57a increases, the projection 57a and the first lead 41 are disconnected from each other. As a result, overcharge or the like is inhibited.

When the displacement of the displacement part 57 further increases due to a further increase in the internal pressure of the case 20, the thinned part 59 or a peripheral edge portion thereof breaks. As a result, the gas contained in the case 20 is released to the outside of the case 20.

### «Modification of Embodiment 1»

A modification of Embodiment 1 of the present disclosure will now be described. A power storage device 10 according to the present modification differs in the configuration of the connection region 42 from Embodiment 1 described above. The following description focuses mainly on differences from Embodiment 1 described above.

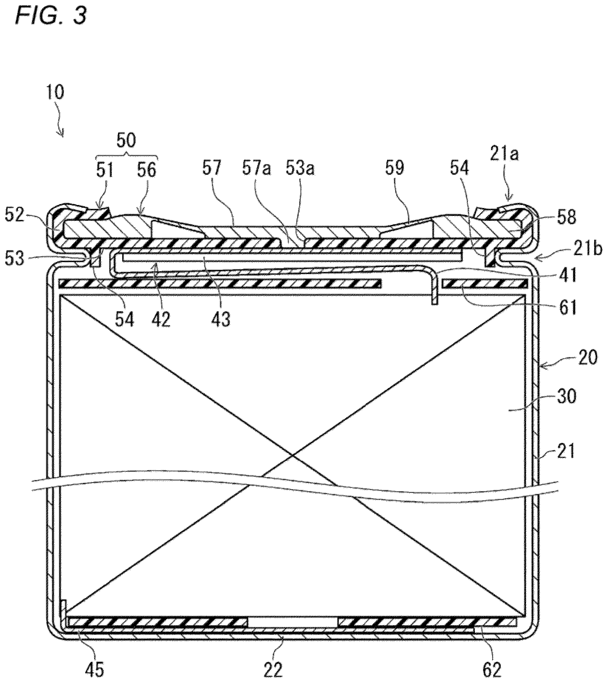

As shown in FIG. 3, the connection region 42 of the present embodiment is longer than the connection region 42 of Embodiment 1 described above. Specifically, one end portion and another end portion of the connection region 42 each overlap the outer circumferential part 58 of the sealing plate 56 as viewed from the axial direction of the case 20 (as viewed from above in FIG. 3). In other words, one end and another end of the connection region 42 are each located outward of an inner end of the outer circumferential part 58 of the sealing plate 56 in the radial direction of the case 20. Also, the base part 53 of the gasket 51 is sandwiched between the one end portion of the connection region 42 and the outer circumferential part 58, and between the other end portion of the connection region 42 and the outer circumferential part 58. Here, a gap may or may not be provided between the connection region 42 of the first lead 41 and the base part 53 of the gasket 51.

The gasket 51 includes a side wall part 54 disposed between the first lead 41 and a protruding end of the groove part 21b. For example, the side wall part 54 may be provided only in a region in which the first lead 41 and the groove part 21b are in proximity to each other, or may be provided over the entire circumference. The side wall part 54 may protrude toward the power storage element 30 from a principal surface (the lower surface in FIG. 3) of the base part 53 on the power storage element 30 side. The side wall part 54 can suppress the connection region 42 from coming into contact with an inner surface of the case 20.

### <<Embodiment 2»

Embodiment 2 of the present disclosure will now be described. A power storage device 10 according to the present embodiment differs in the configuration of the bent part 43 from Embodiment 1 described above. The following description focuses mainly on differences from Embodiment 1 described above.

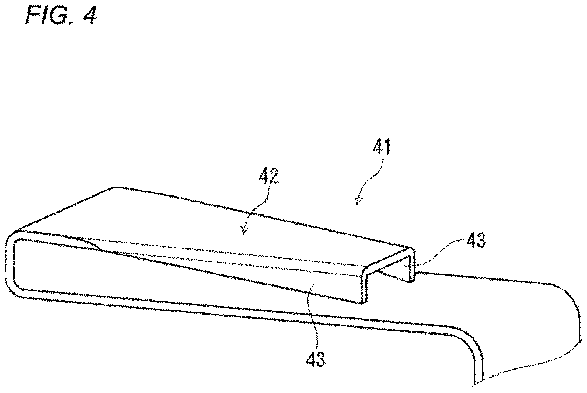

As shown in FIG. 4, a connection region 42 of the present embodiment has one bent part 43 formed at either end of the first lead 41 in a width direction of the first lead 41. Each of the bent parts 43 has a fold inclined relative to a longitudinal direction of the first lead 41. One of the bent parts 43 is disposed at one end of the first lead 41 in the width direction. The other bent part 43 is disposed at the other end of the first lead 41 in the width direction. The bent parts 43 can be formed by bending the first lead 41 along a pair of straight lines inclined relative to the aforementioned longitudinal direction. Here, the pair of straight lines may extend so as to approach each other in a direction from the proximal end side toward the distal end side of the first lead 41.

### <<Embodiment 3»

Embodiment 3 of the present disclosure will now be described. A power storage device 110 according to the present embodiment is a lithium ion secondary battery; however, the present disclosure is not limited thereto. For example, the power storage device 110 may be a lithium ion capacitor, an electric double layer capacitor, a power storage device in a category intermediate between the lithium ion secondary battery and the lithium ion capacitor, or any other electrochemical devices.

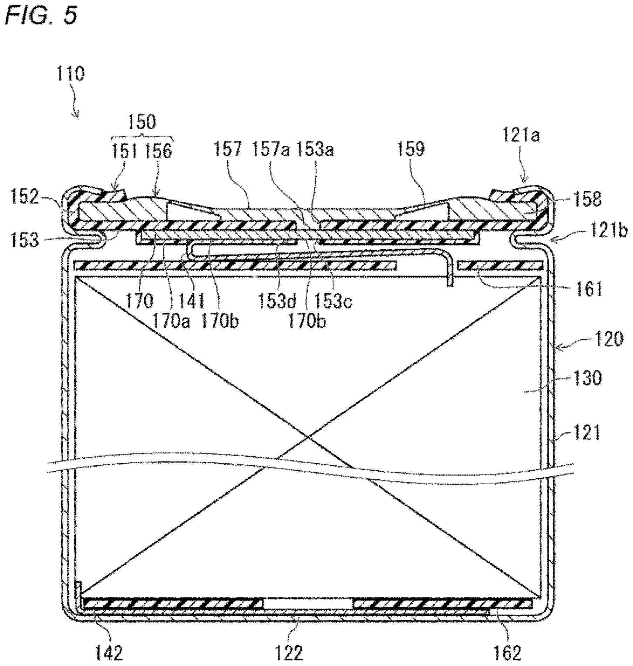

As shown in FIGS. 5 to 7, the power storage device 110 includes a case 120 having a bottomed tubular shape, a power storage element 130 disposed in the case 120 and including a pair of electrodes (not shown), a first lead 141 connected to one electrode of the pair of electrodes, a second lead 142 connected to the other electrode, a sealing member 150 sealing an opening end portion 121a of the case 120, and a reinforcing member 170. The power storage device 110 further includes first and second insulating plates 161 and 162. Each of the first and second insulating plates 161 and 162 is a circular plate-shaped member having a through hole formed therein.

The case 120 includes a tube part 121 having an opening end portion 121a at one end (the upper end in FIG. 5) thereof, and a bottom part 122 closing the other end of the tube part 121. An annular groove part 121b protruding radially inward of the tube part 121 is formed in the vicinity of the opening end portion 121a of the tube part 121. The sealing member 150 is disposed on an inner circumferential surface of the groove part 121b. The opening end portion 121a of the case 120 is crimped onto an outer circumferential part 158 of a sealing plate 156 (described below) via a gasket 151 (described below). Thus, the sealing member 150 is sandwiched between the groove part 121b and the opening end portion 121a, whereby the case 120 is sealed.

The power storage element 130 has a substantially columnar shape. The power storage element 130 is formed by winding a positive electrode and a negative electrode (both not shown) with a separator (not shown) interposed therebetween.

One end of the first lead 141 is connected to one electrode (the positive electrode in this example) of the power storage element 130. The first lead 141 is formed of a band-shaped metal foil; however, the present disclosure is not limited thereto. The other end of the first lead 141 is connected to the reinforcing member 170. As will be described below, the reinforcing member 170 is connected to the sealing plate 156. Accordingly, the sealing plate 156 functions as a positive electrode terminal of the power storage device 110. The first lead 141 is an example of the lead. The reinforcing member 170 is an example of the displacement suppressing means.

One end of the second lead 142 is connected to the other electrode (the negative electrode in this example) of the power storage element 130. The second lead 142 is formed of a band-shaped metal foil; however, the present disclosure is not limited thereto. The other end of the second lead 142 is connected to the bottom part 122 of the case 120. Accordingly, the case 120 functions as a negative electrode terminal of the power storage device 110.

The sealing member 150 includes an insulating gasket 151 and a conductive sealing plate 156. The gasket 151 includes a compression part 152 interposed between the tube part 121 (the groove part 121b) and the sealing plate 156, and a base part 153 overlaid with the sealing plate 156. The base part 153 is disposed between the sealing plate 156 and the power storage element 130. The base part 153 has a planar shape having substantially the same size as the planar shape (circular shape) of the sealing plate 156. An oblong insertion hole 153a is formed in a central region of the base part 153. A peripheral edge portion of the base part 153 and the outer circumferential part 158 of the sealing plate 156 are in close contact with each other.

The reinforcing member 170 is disposed inside the base part 153. The base part 153 covers a principal surface of the reinforcing member 170 on a side opposite (the upper side in FIG. 5) the power storage element 130, except for the region in which the insertion hole 153a is formed. The base part 153 covers a first portion 170a of a principal surface of the reinforcing member 170 on the power storage element 130 side (the lower side in FIG. 5) and has a first opening 153c and a second opening 153d that expose a second portion 170b of the principal surface. The first opening 153c is provided at a position (a central position of the base part 153 in this example) corresponding to a first connection part 181 (described below). The second opening 153d is provided at a position corresponding to a second connection part 182 (described below), and accommodates at least a portion of the other end of the first lead 141. The first opening 153c and the second opening 153d expose, as the second portion 170b, the principal surface of the reinforcing member 170 on the power storage element 130 side at positions at which the first opening 153c and the second opening 153d are respectively disposed. Each of the first opening 153c and the second opening 153d is an example of the at least one opening. Of a principal surface of the base part 153 on the power storage element 130 side, a portion overlapping the reinforcing member 170 protrudes toward the power storage element 130 side relative to a portion not overlapping the reinforcing member 170.

The sealing plate 156 includes a displacement part 157 provided at the center thereof, an outer circumferential part 158 provided around the displacement part 157 and held by the compression part 152 of the gasket 151, and a thinned part 159 linking the displacement part 157 and the outer circumferential part 158. A projection 157a protruding toward the power storage element 130 is formed on the displacement part 157. The projection 157a has an oblong cross-sectional shape (a cross-sectional shape in a cross section perpendicular to the axial direction of the case 120); however, the present disclosure is not limited thereto. The thinned part 159 has a thickness that is smaller than the thickness of the displacement part 157 and the thickness of the outer circumferential part 158.

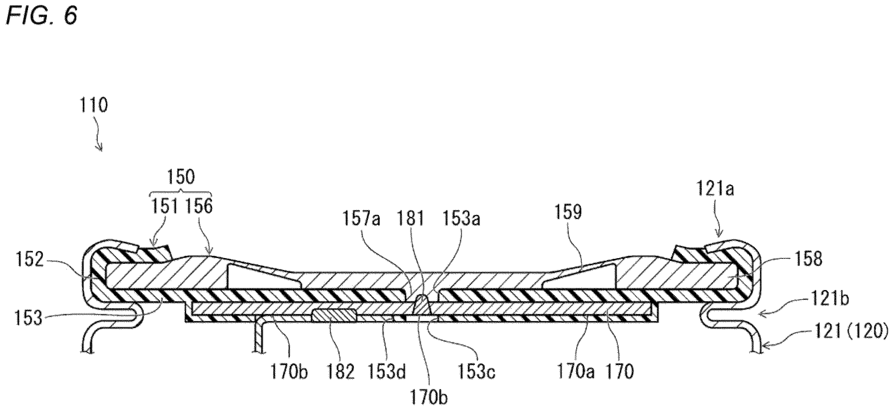

The reinforcing member 170 is provided inside the base part 153 and reinforces the base part 153. The reinforcing member 170 is a conductive member, which is formed of metal, for example. The reinforcing member 170 of the present embodiment is integrated into a single piece with the gasket 151 by insert molding. The principal surface (the lower surface in FIG. 5) of the reinforcing member 170 on the power storage element 130 side has a first portion 170a exposed through the first opening 153c and the second opening 153d, and a second portion 170b covered by the base part 153. As shown in FIG. 6, the reinforcing member 170 is connected to the first lead 141 by the second connection part 182 at the first portion 170a exposed through the second opening 153d.

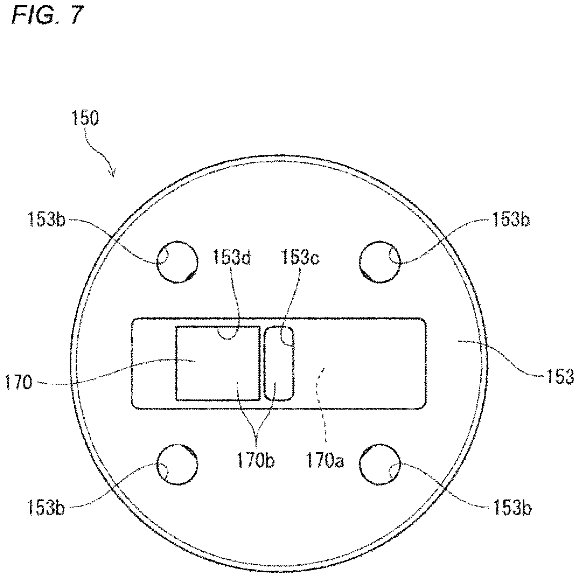

As shown in FIG. 7, the reinforcing member 170 is formed in the shape of a rectangular plate. As shown in FIG. 6, an outer end (a longitudinal end) of the reinforcing member 170 is located outward of an inner end of the outer circumferential part 158 of the sealing plate 156 in a radial direction of the case 120. Note that FIGS. 5 and 6 are cross-sectional views of the power storage device 110 taken along a cross section extending in the longitudinal direction of the reinforcing member 170.

The projection 157a of the sealing plate 156 is inserted into the insertion hole 153a. Here, a gap may or may not be formed between the projection 157a and the insertion hole 153a. As shown in FIG. 6, the projection 157a (the displacement part 157) of the sealing plate 156 is connected to the reinforcing member 170 at the first connection part 181. Thus, the displacement part 157 of the sealing plate 156 is electrically connected to the first lead 141 via the conductive reinforcing member 170.

As shown in FIG. 6, the first connection part 181 connecting the projection 157a and the reinforcing member 170 to each other, and the second connection part 182 connecting the reinforcing member 170 and the first lead 141 to each other are spaced apart from each other in the radial direction of the case 120. The first connection part 181 may have a joining strength that is lower than the joining strength of the second connection part 182. The first connection part 181 and the second connection part 182 can be separately formed by laser welding, for example. For example, the first connection part 181 may be formed by laser welding through the first opening 153c, and the second connection part 182 may be formed by laser welding through the second opening 153d.

As shown in FIG. 7, the base part 153 of the gasket 151 has a plurality of ventilation holes (through holes) 53b formed therein. The ventilation holes 153b are in communication with the displacement part 157 so that the internal pressure of the case 120 is transmitted to the displacement part 157.

When the internal pressure of the case 120 increases, the projection 157a of the displacement part 157 is displaced in a direction away from the power storage element 130 (i.e., a direction away from the reinforcing member 170 and the first lead 141). On the other hand, the displacement of the reinforcing member 170 and the first lead 141 is suppressed by the base part 153 reinforced by the reinforcing member 170. Accordingly, when the displacement of the projection 157a increases, the projection 157a and the reinforcing member 170 are disconnected from each other. Consequently, the displacement part 157 and the first lead 141 are electrically disconnected from each other, whereby overcharge or the like is inhibited.

When the displacement of the displacement part 157 further increases due to a further increase in the internal pressure of the case 120, the thinned part 159 or a peripheral edge portion thereof breaks. As a result, the gas contained in the case 120 is released to the outside of the case 120.

### <<Embodiment 4»

Embodiment 4 of the present disclosure will now be described. A power storage device 110 according to the present embodiment differs in the shape of the reinforcing member 170 from Embodiment 3 described above. The following description focuses mainly on differences from Embodiment 3 described above.

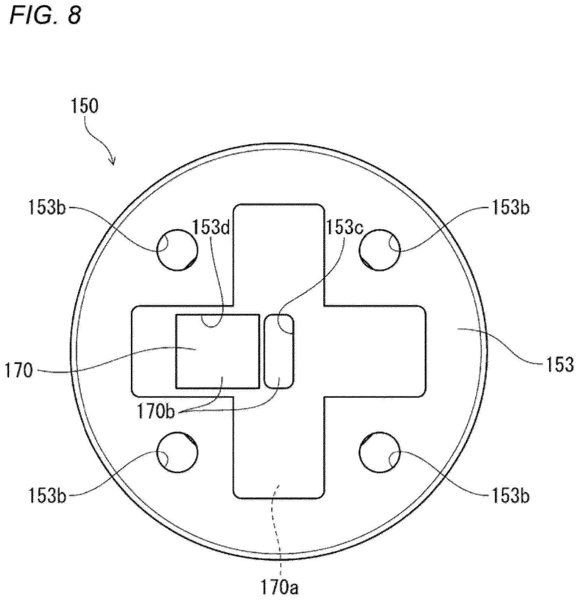

As shown in FIG. 8, the reinforcing member 170 according to the present modification is formed in the shape of a cruciform plate. This configuration can more effectively reinforce the base part 153 of the gasket 151.

### <<Embodiment 5»

Embodiment 5 of the present disclosure will now be described. A power storage device 110 according to the present embodiment differs in the shape of the reinforcing member 170 from Embodiment 3 described above. The following description focuses mainly on differences from Embodiment 3 described above.

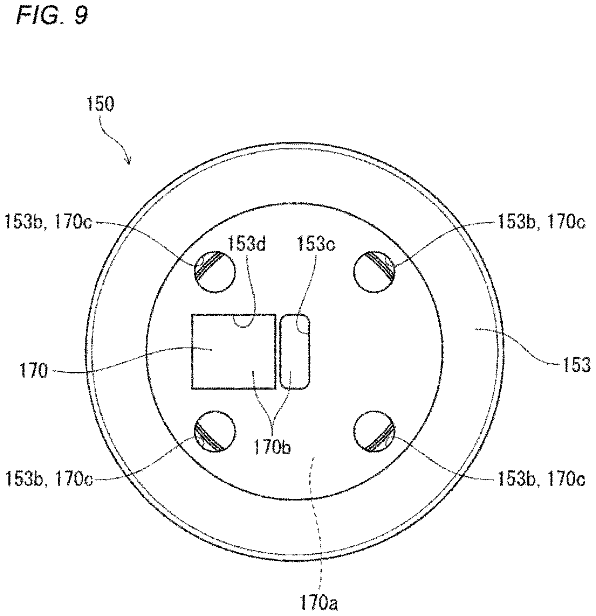

As shown in FIG. 9, the reinforcing member 170 of the present embodiment is formed in the shape of a circular plate. The reinforcing member 170 has circular through holes 170c formed at positions respectively overlapping the ventilation holes 153b. Note that the shape of the through holes 170c is not limited to a circular shape. This configuration can more effectively reinforce the base part 153 of the gasket 151.

Although the present disclosure has been described in terms of the presently preferred embodiments, it is to be understood that such disclosure is not to be interpreted as limiting. Various alterations and modifications will no doubt become apparent to those skilled in the art to which the present disclosure pertains, after having read the above disclosure. Accordingly, it is intended that the appended claims be interpreted as covering all alterations and modifications as fall within the true spirit and scope of the present disclosure.

### [Industrial Applicability]

The present disclosure is applicable to a power storage device.

### [Reference Signs List]

10: Power storage device
   20: Case
      21: Tube part
         21a: Opening end portion
         21b: Groove part
      22: Bottom part
   30: Power storage element
   41: First lead (lead)
      42: Connection region
      43: Bent part (displacement suppressing means)
   45: Second lead
   50: Sealing member
      51: Gasket
         52: Compression part
         53: Base part
            53a: Through hole
         54: Side wall part
      56: Sealing plate
         57: displacement part
            57a: Projection
         58: Outer circumferential part
         59: Thinned part
   61: First insulating plate
   62: Second insulating plate
110: Power storage device
   120: Case
      121: Tube part
         121a: Opening end portion
         121b: Groove part
      122: Bottom part
   130: Power storage element
   141: First lead (lead)
   142: Second lead
   150: Sealing member
      151: Gasket
         152: Compression part
         153: Base part
            153a: Insertion hole
            153b: Ventilation hole
            153c: First opening (opening)
            153d: Second opening (opening)
      156: Sealing plate
         157: displacement part 157a: Projection
         158: Outer circumferential part
         159: Thinned part
   161: First insulating plate
   162: Second insulating plate
   170: Reinforcing member (displacement suppressing means)
      170a: First portion
      170b: Second portion
      170c: Through hole
   181: First connection part
   182: Second connection part

## Claims

1. A power storage device comprising:
a case including a cylindrical tube part having an opening end portion at one end thereof, and a bottom part closing another end of the tube part;
a power storage element disposed in the case and including a pair of electrodes;
a band-shaped lead connected to one electrode of the pair of electrodes; and
a sealing member sealing the opening end portion of the case, wherein
the sealing member includes an insulating gasket and a conductive sealing plate,
the gasket includes a compression part interposed between the tube part and the sealing plate, and a base part disposed between the sealing plate and the power storage element,
the sealing plate includes a displacement part, and an outer circumferential part provided around the displacement part and held by the compression part,
the displacement part of the sealing plate and the lead are electrically connected to each other,
the displacement part is configured to be displaced in a direction away from the lead in response to an increase in an internal pressure of the case, thereby electrically disconnecting the displacement part and the lead from each other, and
the power storage device further comprises displacement suppressing means disposed in the case and configured to suppress displacement of the lead when the displacement part is displaced in the direction away from the lead.

2. The power storage device according to claim 1, wherein
the base part has a through hole formed therein,
the lead includes a connection region in which at least one bent part is formed as the displacement suppressing means at at least one end of the lead in a width direction of the lead, and
the displacement part of the sealing plate and the connection region of the lead are connected to each other via the through hole.

3. The power storage device according to claim 2, wherein the at least one bent part has a fold extending along a longitudinal direction of the lead.

4. The power storage device according to claim 2, wherein the at least one bent part has a fold inclined relative to a longitudinal direction of the lead.

5. The power storage device according to any one of claims 2 to 4, wherein
the at least one bent part includes two bent parts,
one of the bent parts is disposed at one end of the lead in the width direction, and
the other bent part is disposed at another end of the lead in the width direction.

6. The power storage device according to any one of claims 2 to 5, wherein
one end portion and another end portion of the connection region each overlap the outer circumferential part of the sealing plate as viewed from an axial direction of the case, and
the base part of the gasket is sandwiched between the one end portion of the connection region and the outer circumferential part, and between the other end portion of the connection region and the outer circumferential part.

7. The power storage device according to claim 1, further comprising,
as the displacement suppressing means, a reinforcing member that reinforces the base part, wherein
the base part covers a first portion of a principal surface of the reinforcing member on the power storage element side, and has at least one opening exposing a second portion of the principal surface.

8. The power storage device according to claim 7, wherein
the reinforcing member is a conductive member,
the displacement part of the sealing plate and the reinforcing member are connected to each other by a first connection part,
the reinforcing member and the lead are connected to each other by a second connection part, and
the displacement part is configured to be displaced in a direction away from the lead in response to an increase in an internal pressure of the case, thereby disconnecting the displacement part and the reinforcing member from each other so as to electrically disconnect the displacement part and the lead from each other.

9. The power storage device according to claim 8, wherein the first connection part and the second connection part are spaced apart from each other in a radial direction of the case.

10. The power storage device according to claim 8 or 9, wherein the at least one opening exposes, as the second portion, the principal surface at positions respectively corresponding to the first connection part and the second connection part.

11. The power storage device according to claim 10, wherein
the at least one opening includes a first opening exposing the first connection part, and a second opening exposing the second connection part, and
the first opening and the second opening are spaced apart from each other.

12. The power storage device according to any one of claims 7 to 11, wherein, of a principal surface of the base part on the power storage element side, a portion overlapping the reinforcing member protrudes toward the power storage element side relative to a portion not overlapping the reinforcing member.

13. The power storage device according to any one of claims 7 to 12, wherein the base part covers at least a portion of a principal surface of the reinforcing member on the sealing plate side.
